# EUROPEAN PATENT APPLICATION

(11) **EP 2 075 671 A1**
(43) Date of publication of application: **01.07.2009**
(21) Application number: 08022290.4
(22) Date of filing: 22.12.2008
(51) Int. Cl.: G06F 3/01

(54) **User interface of portable device and operating method thereof**

(30) Priority: 26.12.2007 TW 96150316
(71) Applicant: HTC Corporation, Taoyuan County 330 (TW)
(72) Inventor: Wang, John C., Taoyuan City Taoyuan County 330 (TW); Tai, Chih-Wei, Taoyuan City Taoyuan County 330 (TW); Kao, Yih-Feng, Taoyuan City Taoyuan County 330 (TW)
(74) Representative: Becker, Eberhard

(57) **Abstract**

An operating method for a user interface is provided. The method is suitable for performing an input operation on a virtual control panel of a portable device by an input apparatus. The method comprises steps of receiving an input signal through the virtual control panel. Then, a type of the input apparatus for generating the input signal on the virtual control panel is determined. Thereafter, according to the type of the input apparatus, a corresponding sensory feedback is generated on the portable device.

## Description

### BACKGROUND OF THE INVENTION

### Field of the Invention

The present invention relates to an operating method for a user interface of a portable device and more particularly, to a method of generating various sensory feedbacks to confirm receipt of input signals according to different types of input apparatus.

### Description of Related Art

With the rapid advancement of pointing stick and touch pad technology, manufacturers of notebook computers, cellular phones, or portable multimedia players and so forth are all following a trend to make use of touch screens to replace conventional keyboards as a new generation input interface. Take the cellular phone as an example. A user has to look at the display screen while pressing the key pads with his fingers at the same time in order to perform operations such as inputting text or selecting a menu item. However, for a cellular phone integrated with a touch screen, bedsides using fingers, the user may also use a facilitating device such as a stylus to directly input text or activate an application on the screen. Thus, the touch screen may provide the user with a more flexible and convenient method of input.

However, the difference between the conventional physical keyboard and the touch screen lies in that when the touch screen is used for inputting, there is not any substantial input feedback. In other words, the user does not have the same kind of feedback such as feeling the keys springing back or hearing the sound of key strokes when he inputs via the touch screen as opposed to via a physical keyboard. As such, the user has difficulty immediately confirming his input action through such touch feeling or auditory feedback. Although the current technology provides a system feedback signal directed at solving the abovementioned problem of the user having difficulty confirming his input action, the feedback signal can only passively respond to the user's input action with a single feedback signal but cannot generate various feedback signals according to different input apparatus.

### SUMMARY OF THE INVENTION

The present disclosure provides an operating method for a user interface allowing a user to obtain various sensory feedbacks according to different input apparatus so as to confirm his input action when using a touch screen for input.

The present disclosure provides an operating method for a user interface suitable for using an input apparatus to directly perform an input operation on a virtual control panel of a portable device. The method includes receiving an input signal through the virtual control panel. Then, a determination is made on which type of input apparatus is used to generate the input signal on the virtual control panel. Next, according to the type of the apparatus, a sensory feedback is generated on the portable device.

The present disclosure provides a user interface including a touch control and display unit capable of displaying a virtual control panel and receiving from the virtual control panel an input signal generated through touch actions by an input apparatus; an input determination unit for determining a type of the input apparatus; a sensory feedback device generating a sensory feedback according to the determination result of the input determination unit.

According to a preferred embodiment of the present disclosure providing a user interface and an operating method thereof, the sensory feedback includes a touch vibration, a visual change, or a sound. In addition, according to the type of the apparatus, generating the sensory feedback on the portable device includes the following. When the apparatus is a user using his finger, the sensory feedback is the touch vibration which may be mechanical vibration generated by the portable device to allow the user to feel the mechanical vibration when using his finger for inputting. If the apparatus is a stylus, the portable device does not generate any vibration. Furthermore, according to the type of the apparatus, generating the sensory feedback on the portable device includes the following. When the apparatus is a stylus, the sensory feedback is the visual change which displays a ripple image transformation moving outward from a center which is the input point of the input signal selected by the stylus on the virtual control panel. Even when sound effects are used as feedback, different sound effects may be generated for different input apparatus. For example, when the apparatus is a stylus, the portable device feeds back with a sharper sound; when the apparatus is the user's finger, the portable device feeds back with a deeper sound.

According to a preferred embodiment of the present disclosure providing a user interface and an operating method thereof, the portable device has a touch controller as a contact interface between the input apparatus and the virtual control panel. In addition, the step of determining the type of the apparatus includes the following. When the input apparatus contacts the touch controller, the determination can be made by measuring a size of a contact area of the input apparatus and the touch controller, a pressure value applied on the touch controller by the input apparatus, or a temperature of the input apparatus sensed by the touch controller.

According to a preferred embodiment of the present disclosure providing a user interface and an operating method thereof, the portable device may be a personal digital assistant (PDA) or a cellular phone.

According to a preferred embodiment of the present disclosure providing a user interface and an operating method thereof, the virtual control panel may be a virtual keyboard, a checkbox set, or a radiobutton set.

In the present disclosure, the touch pad is used to display the virtual control panel. The user may select any key, checkbox, or radiobutton. A control system of the portable device will generate a sensory feedback signal according to the input apparatus used by the user to confirm receipt of the input signal. Through the sensory feedback signal, the user gets the feeling of operating on a physical key. Moreover, in the present disclosure, the user may decide for various input apparatus to have different feedback signals from the portable device, which is different from the conventional technology where there is only one type of feedback signal or no feedback signal at all regardless of the type of the input apparatus.

To make the above and other objectives, features, and advantages of the present disclosure more comprehensible, several embodiments accompanied with figures are detailed as follows.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

Fig. 1 illustrates a flowchart of an operating method for a user interface according to one preferred embodiment of the present disclosure.

Fig. 2 is a simplified schematic diagram illustrating the example when a finger is used as an input apparatus and a touch vibration feedback is generated.

Fig. 3 is a simplified schematic diagram illustrating the example when a stylus is used as an input apparatus and a visual change feedback is generated.

Fig. 4 is a system structural diagram illustrating a user interface according to one preferred embodiment of the present disclosure.

### DESCRIPTION OF EMBODIMENTS

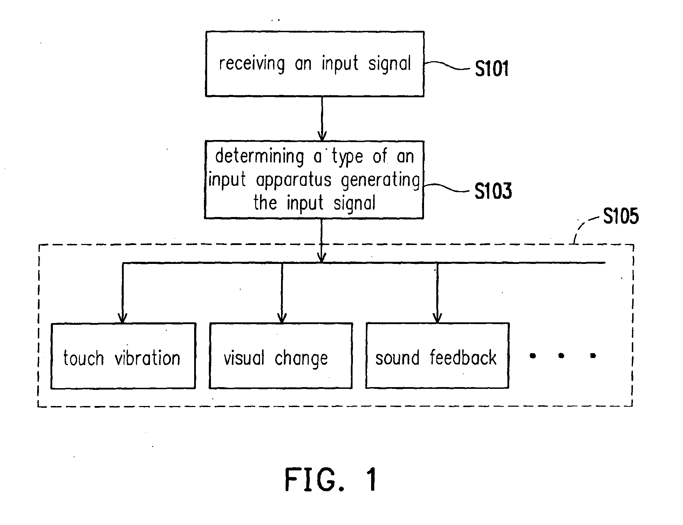

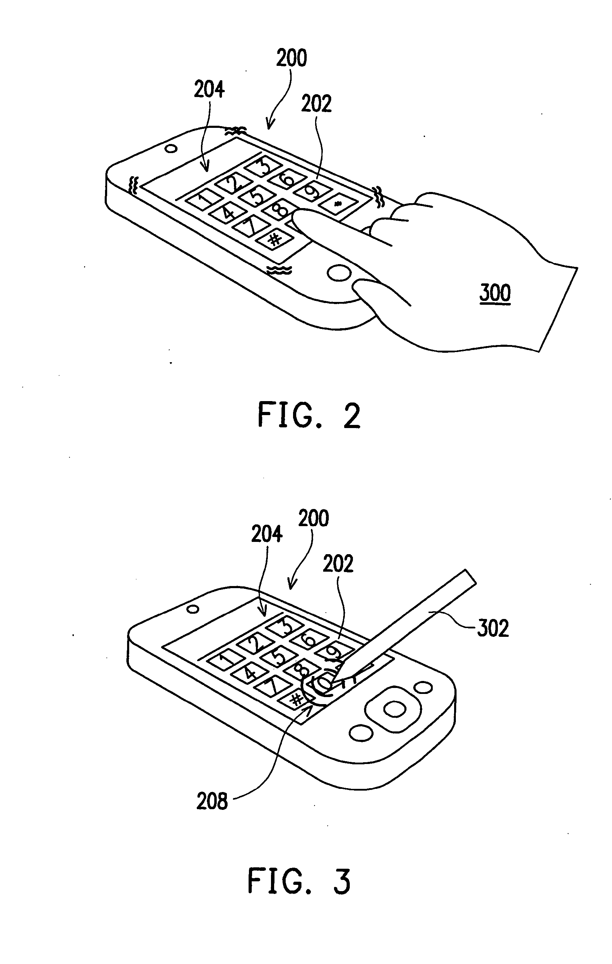

Fig. 1 illustrates a flowchart of an operating method for a user interface according to one preferred embodiment of the present disclosure. Referring to Fig. 1, first in step S101, an input operation is performed on a virtual control panel of a portable device using an input apparatus and the portable device receives an input signal through the virtual control panel. The portable device is, for example, a portable computer, a personal digital assistant (PDA), or a cellular phone. Fig. 2 is a simplified schematic diagram illustrating the example when a finger is used as an input apparatus and a touch vibration feedback is generated. Fig. 3 is a simplified schematic diagram illustrating the example when a stylus is used as an input apparatus and a visual change feedback is generated. Referring to all Fig. 1, Fig. 2, and Fig. 3, a portable device 200 has a touch control and display unit 202, for example. The touch control and display unit 202 has capability of both displaying images and receiving input signals generated from touching a surface thereof. Thus, by means of the touch control and display unit 202, a virtual control panel 204 may be established. In other words, keys on the virtual control panel 204 are visually displayed non-physical keys, which also have the same signal input functions when touched by an input apparatus. The virtual control panel 204 in Fig. 2 and Fig. 3 only has a virtual keyboard including 12 individual keys Nevertheless, the present disclosure should not be construed as being limited to the figures presented herewith. Key types which may be included on the virtual control panel 204 include a checkbox set and a radiobutton set, etc.

Next, in step S 103, a determination is made on which type of input apparatus is used to generate the input signal on the virtual control panel 204. Approaches to determine the type of the input apparatus include the following. When the user uses an input apparatus to contact the virtual control panel 204, the determination on the type of the input apparatus can be made by measuring a size of a contact area between the input apparatus and the virtual control panel 204, a pressure value applied on the virtual control panel 204 by the input apparatus, or a temperature of the input apparatus sensed by the virtual control panel 204. In other words, by comparing parameters such as the contact area (a contact area made by a finger 300 is generally larger than that by a stylus 302), contact pressure value (pressure generated by the finger 300 is generally smaller than that by the stylus 302), and temperature (temperature of the finger 300 is generally higher than that of the stylus 302) with a built-in database in the portable device, the type of the input apparatus used by the user can be determined.

Next, in step S105, a sensory feedback is generated on the portable device 200 to confirm receipt of the input signal according to the type of the input apparatus used by the user. That is, the portable device 200 automatically sends a feedback signal to the user for different input apparatus so that the user knows the portable device 200 has actually received the signal. The sensory feedback may be a mechanical feedback or a software feedback. In other words, the feedback signal can be a mechanical vibration or an activated sound. Alternatively, the feedback signal may be an image change (i.e. visual change) of the virtual control panel 204 displayed on the touch control and display unit 202 as a result of executing a program.

As shown in Fig. 2, when the input apparatus is the finger 300 of the user, the sensory feedback is, for example, touch vibration or sound change so that the user can surely confirm the task of signal input has been completed. The touch vibration includes a mechanical vibration of the portable device to allow the user to feel the mechanical vibration through the finger 300 that generates the input signal. The mechanical vibration is activated by a built-in vibration device, for example. In addition, the vibration device can be directly connected with the touch control and display unit 202 which is in contact with the input apparatus to provide the mechanical vibration touch specifically for the virtual control panel 204. If the stylus 302 is detected as the input apparatus, the touch feedback or vibration with different frequency is not adopted.

Referring to Fig. 3, because the touch feedback may not be effectively transmitted through the stylus to the user, when the input apparatus is the stylus 302, feedback may be in the form of visual change, sound change, or no sensory response. The visual change, for example, is to generate an image transformation from a center, an input point/input key (e.g. a key 0 in the present embodiment) toward the outside. The image transformation (e.g. a ripple transformation 208) is a software feedback generated from execution of a program, for example. If the finger 300 is detected as the input apparatus, the visual feedback or other image transformation is not adopted.

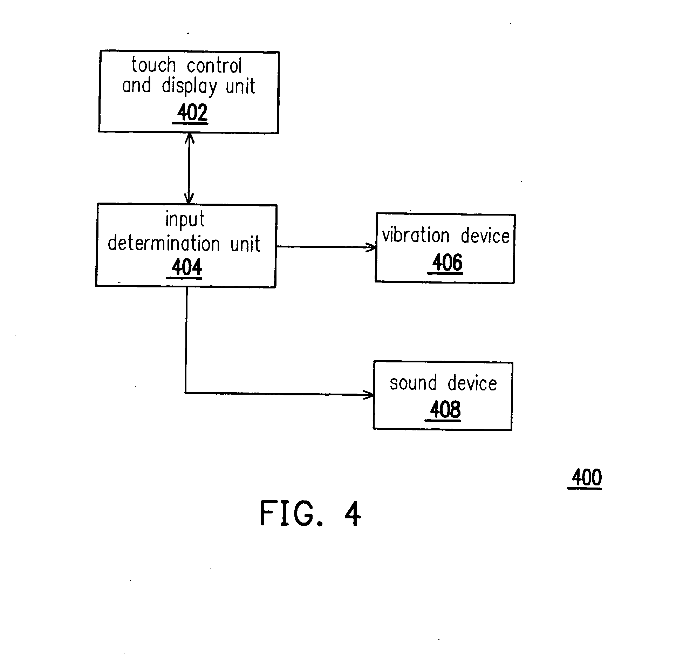

Referring to both Fig. 2 and Fig. 3, sound change may also be a sensory feedback for different input apparatus. For example, when the finger 300 is detected as the input apparatus, a sound device of the portable device 200 plays a key-pressing sound effect (e.g. a deeper key-pressing sound effect). When the stylus 302 is detected as the input apparatus, the sound device of the portable device 200 plays another key-pressing sound effect (e.g. a sharper key-pressing sound effect). Another embodiment of the present disclosure further provides a system structure of a user interface 400 capable of implementing the abovementioned operating method for a user interface. Referring to Fig. 4, the user interface 400 includes a touch control and display unit 402, an input determination unit 404, a vibration device 406, and a sound device 408.

As the touch control and display unit 202 shown in Fig. 2 and Fig. 3, the touch control and display unit 402 has capability of both displaying images and receiving input signals generated from touching a surface thereof. Thus, by means of the touch control and display unit 402, a virtual control panel may be established.

The input determination unit 404 may determine which type of input apparatus is used by the user to input signals on the virtual control panel (e.g. identifying the input apparatus as a finger or a stylus). Parameters which may be used for determination include a size of a contact area (a contact area made by a finger is generally larger than that by a stylus), a contact pressure value (pressure generated by a finger is generally smaller than that by a stylus), and a temperature of the input apparatus (temperature of a finger is generally higher than that of a stylus).

After determining the type of the input apparatus, the input determination unit 404 controls a sensory feedback device to generate a sensory feedback for the user, wherein a different sensory feedback is generated for different input apparatus. In the present embodiment, the sensory feedback includes a touch feedback, a visual feedback, an auditory feedback, and so forth. Therefore, the sensory feedback device includes the touch control and display unit 402, the vibration device 406, and the sound device 408.

As described in the previous embodiment, after determining the type of input apparatus to be a finger, the input determination unit 404 controls the vibration device 406 to generate a touch vibration so that the user feels the touch feedback which may be a mechanical vibration. In addition, the vibration device 406 can be directly connected with the touch control and display unit 402 which is in contact with the input apparatus to provide the mechanical vibration touch specifically for the virtual control panel. If the input determination unit 404 detects a stylus as the input apparatus, the touch feedback or other frequency vibration is not adopted.

As illustrated in the previous embodiment, after determining the type of input apparatus to be a stylus, the input determination unit 404 controls the touch control and display unit 402 to generate a feedback in the form of visual change, sound change, or no sensory response. The visual change, for example, is to generate an image transformation (e.g. a ripple transformation) from a center, an input point of the input signal, toward the outside. The image transformation is a software feedback generated from execution of a program, for example. If a finger is detected as the input apparatus, the visual feedback or other image transformation is not adopted.

As described in the previous embodiment, the input determination unit 404 also uses sound changes as auditory feedbacks for different input apparatus. For example, if the input determination unit 404 detects a finger as the input apparatus, the input determination unit 404 controls the sound device 406 to play a key-pressing sound effect (e.g. a deeper key-pressing sound effect). If the input determination unit 404 detects a stylus as the input apparatus, the input determination unit 404 controls the sound device 406 to play another key-pressing sound effect (e.g. a sharper key-pressing sound effect).

In the present disclosure, the touch control and display unit is used to display the virtual control panel. The user may select any key, checkbox, or radiobutton. A control system of the portable device will generate a sensory feedback signal according to the type of the input apparatus used by the user to confirm receipt of the input signal. Through the sensory feedback signal, the user gets the feeling of operating on a physical key. Moreover, in the present disclosure, the user may decide for various input apparatus to have different feedback signals from the portable device, which is different from the conventional technology where there is only one type of feedback signal or no feedback signal at all regardless of the type of the input apparatus. The aforementioned types of sensory feedbacks are for the purpose of illustrating the present disclosure and are not intended to limit the scope hereof. The various types of sensory feedbacks may be used in combination to simultaneously deliver different touch and sound feedbacks on a portable device.

Although the present disclosure has been disclosed by the above embodiments, they are not intended to limit the present disclosure. Anybody skilled in the art may make some modifications and alterations without departing from the spirit and scope of the present disclosure. Therefore, the protection range of the present disclosure falls in the appended claims.

## Claims

1. An operating method for a user interface, suitable for using an input apparatus to directly perform an input operation on a virtual control panel of a portable device, the method comprising:
receiving an input signal through the virtual control panel;
determining a type of the input apparatus used to generate the input signal on the virtual control panel; and
generating a sensory feedback on the portable device according to the type of the input apparatus.

2. The operating method for a user interface as claimed in claim 1, wherein generating a sensory feedback on the portable device according to the type of the input apparatus comprises:
generating a touch vibration when the input apparatus is a finger of a user.

3. The operating method for a user interface as claimed in claim 1, wherein generating a sensory feedback on the portable device according to the type of the input apparatus comprises:
generating a visual change on the portable device when the input apparatus is a stylus.

4. The operating method for a user interface as claimed in claim 3, wherein the visual change is an image transformation from a center, which is an input point of the input signal in the virtual control panel selected by the stylus, toward outside.

5. The operating method for a user interface as claimed in claim 1, wherein generating a sensory feedback on the portable device according to the type of the input apparatus comprises:
generating a sound when the input apparatus is a finger of a user or a stylus.

6. The operating method for a user interface as claimed in claim 5, wherein when the input apparatus is the finger, the sound is a first key-pressing sound effect and when the input apparatus is the stylus, the sound is a second key-pressing sound effect sharper than the first key-pressing sound effect.

7. The operating method for a user interface as claimed in claim 1, wherein determining a type of the input apparatus comprises analyzing the input signal and thereby obtaining a size of a contact area of the input apparatus on the virtual control panel, a pressure value of the input apparatus applied on the virtual control panel, or a temperature of the input apparatus sensed by the virtual control panel as a basis for determining the type of the input apparatus.

8. A user interface of a portable device, comprising:
a touch control and display unit, capable of displaying a virtual control panel and receiving, from the virtual control panel, an input signal generated through a contact by an input apparatus;
an input determination unit, for determining a type of the input apparatus; and
a sensory feedback device, for generating a sensory feedback according to the type of the input apparatus.

9. The user interface as claimed in claim 8, wherein the sensory feedback device comprises a vibration device, and when the input apparatus is a finger of a user, the sensory feedback is a touch vibration.

10. The user interface as claimed in claim 9, wherein the vibration device is connected to the touch control and display unit.

11. The user interface as claimed in claim 8, wherein the sensory feedback device comprises the touch control and display unit, and when the input apparatus is a stylus, the sensory feedback is a visual change generated on the virtual control panel.

12. The user interface as claimed in claim 11, wherein the visual change is an image transformation from a center, which is an input point of the input signal in the virtual control panel selected by the stylus, toward outside.

13. The user interface as claimed in claim 8, wherein the sensory feedback device comprises a sound device, and when the input apparatus is a finger of a user or a stylus, the sensory feedback is a sound.

14. The user interface as claimed in claim 13, wherein when the input apparatus is the finger, the sound is a first key-pressing sound effect and when the input apparatus is the stylus, the sound is a second key-pressing sound effect sharper than the first key-pressing sound effect.

15. The user interface as claimed in claim 8, wherein the input determination unit analyzes the input signal and thereby obtains a size of a contact area of the input apparatus on the virtual control panel, a pressure value of the input apparatus applied on the virtual control panel, or a temperature of the input apparatus sensed by the virtual control panel as a basis for determining the type of the input apparatus.
